# FASCICULE DE BREVET EUROPEEN

(11) **EP 3 318 608 B1**
(45) Date de publication et mention de la délivrance du brevet: **06.05.2026**
(21) Numéro de dépôt: 17199719.0
(22) Date de dépôt: 02.11.2017
(51) Int. Cl.: C08L 97/00

(54) **COMPOSITION COMPRENANT DES GRANULÉS DE LIÈGE ET UNE ÉMULSION DE SUBSTANCE HYDROPHOBE, ET BOUCHON PRÉPARÉ À PARTIR DE CETTE DERNIÈRE**
ZUSAMMENSETZUNG, DIE KORKGRANULAT UND EINE EMULSION AUS EINER HYDROPHOBEN SUBSTANZ UMFASST, UND DARAUS HERGESTELLTER KORKEN
COMPOSITION COMPRISING CORK GRANULES AND AN EMULSION OF A HYDROPHOBIC SUBSTANCE, AND CORK PREPARED USING THE LATTER

(30) Priorité: 04.11.2016 FR 1660694
(43) Date de publication de la demande: 09.05.2018
(73) Titulaire: DIAM BOUCHAGE, 66400 Ceret (FR)
(72) Inventeur: TIXADOR, Dimitri, 66110 Amélie-les bains (FR); CHEVALIER, Véronique, 66140 Canet-en-Roussillon (FR); LOISEL, Christophe, 66180 Villeneuve de la Raho (FR); TOURNEIX, Dominique, 66240 Saint Esteve (FR)
(74) Mandataire: Casalonga

(56) Documents cités:
- WO-A1-2012/089775
- WO-A1-2015/034383
- WO-A1-2015/107113
- WO-A1-2015/107114
- WO-A1-92/12848
- FR-A- 770 343
- FR-A1- 3 002 845

## Description

La présente invention concerne une composition comprenant des granulés de liège et une ou plusieurs substances hydrophobes en émulsion dans un solvant, un matériau à base de granulés de liège enrobés préparé à partir de ladite composition et un procédé de fabrication dudit matériau.

Elle est aussi relative à l'utilisation de ladite composition comme matière première de bouchon, à un bouchon comprenant ledit matériau et son procédé de fabrication.

Le liège est un matériau naturel, imperméable et léger, qui provient de l'écorce de certaines espèces de chênes, telles que les chênes-lièges, qui se trouvent typiquement dans les pays du pourtour méditerranéen, en Europe et en Afrique du Nord.

Le liège trouve notamment son utilisation dans la fabrication de bouchons, qui servent à boucher des récipients tels que des bouteilles contenant des liquides destinés à l'alimentation, en particulier, du vin.

Le liège est un matériau élastique, résilient, comprimable et imperméable aux liquides, ayant en même temps une perméabilité aux gaz suffisante pour permettre un échange nécessaire à la maturation du produit en bouteille, et présentant un fort coefficient de friction.

De très nombreuses recherches ont été menées pour tenter de mettre au point des compositions dont les propriétés se rapprochent de celles du liège naturel et qui permettent de le remplacer notamment pour la fabrication de bouchons, par exemple de bouchons destinés à fermer les bouteilles de vin.

En effet, la récolte du liège est limitée à quelques régions du monde dans lesquelles la culture des chênes-lièges est rentable, et la production de liège naturel équilibre à peine les besoins. Ces recherches ont conduit à fabriquer des bouchons en liège aggloméré constitué de farines ou de granulés de liège et d'un liant ou colle qui assure la cohésion du bouchon.

Néanmoins, ces bouchons présentent des problèmes d'infiltration, c'est-à-dire que le liquide contenu dans la bouteille (vin ou spiritueux) remonte par capillarité dans le bouchon.

Pour résoudre ce problème, il est connu d'utiliser des microsphères, plus particulièrement des microparticules sphériques, présentant une taille allant de 1 µm à 1 mm, notamment d'environ 10 micromètres. Ces dernières sont composées d'une capsule plastique renfermant un gaz, et sont expansibles. Lors de l'apport de chaleur, la capsule se ramollit, et la pression interne exercée par le gaz augmente, provoquant une importante augmentation du volume des microsphères. Le volume final peut atteindre jusque 50 fois le volume initial. Cet additif permet au bouchon final d'être protéger contre les infiltrations.

Cependant, les procédés de fabrication ne mettent pas en œuvre que des matières naturelles.

Par matières premières naturelles, on entend une substance présente dans la nature.

Il est déjà connu des demandes de brevet français Nos. 3 016 367 et 3 016 368, d'utiliser des liants biosourcés, de type polyépoxyde ou polyhydroxyuréthane.

Par le terme «biosourcé », on entend au sens de la présente invention un composé issu de la biomasse ayant subi ou non un traitement chimique. A titre d'exemples de biomasse, on peut notamment citer les extraits de végétaux, d'arbres, de vigne, de fruits, de légumes, d'algues ou les produits d'origine animale.

Il existe donc encore un besoin de remplacer les microsphères dans les bouchons fabriqués à partir de granulés de liège, et d'obtenir des bouchons ne présentant pas d'infiltration tout en ayant à la fois des propriétés mécaniques et organoleptiques qui soient au moins équivalentes à celles des bouchons en liège seul ou microaggloméré avec des microsphères telles que décrites ci-dessus.

L'invention vise donc à satisfaire ces besoins en proposant une nouvelle composition comprenant des granulés de liège et une substance hydrophobe en émulsion dans un solvant.

La composition selon l'invention est notamment destinée à la fabrication de bouchons, notamment pour bouteilles de vins tranquilles, effervescents ou spiritueux ou solutions aqueuses comme les jus de fruits, ou encore d'huiles. Les bouchons, ainsi produits à partir de cette composition, gardent les avantages du liège naturel, avec des caractéristiques physiques voisines voire supérieures et avec un aspect extérieur similaire à celui du liège naturel.

De plus, les bouchons ne présentent pas d'infiltration tout en ayant de bonnes propriétés mécaniques comme une bonne élasticité, et de bonnes propriétés organoleptiques. En ce qui concerne ces dernières, le bouchon ne donne aucun goût au contenu.

Ainsi, la composition peut être appliquée à l'ensemble des bouchons avec au moins une partie agglomérée comme c'est le cas pour les bouchons à champagne ou vins effervescents, les bouchons avec une ou plusieurs rondelles à une ou aux deux extrémités (1+1, 2+2, 0+2 ou toute autre combinaison possible).

Un premier objet de la présente invention est donc une composition comprenant des granulés de liège et une ou plusieurs substances hydrophobes en émulsion dans un solvant, selon la revendication 1.

L'invention concerne également l'utilisation de la composition selon l'invention, comme matière première de bouchon.

D'autres objets de l'invention sont un matériau obtenu à partir de ladite composition et son procédé de fabrication.

L'invention a encore pour objet un bouchon comprenant ledit matériau et son procédé de fabrication à partir de la composition selon l'invention.

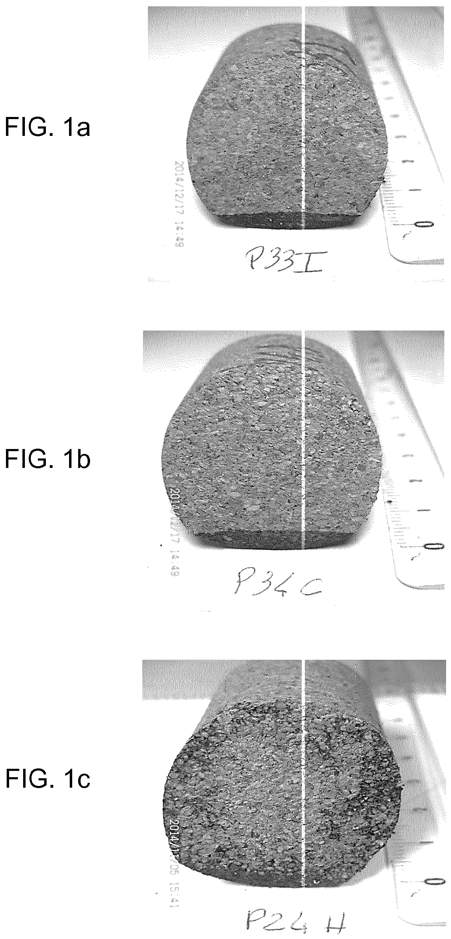

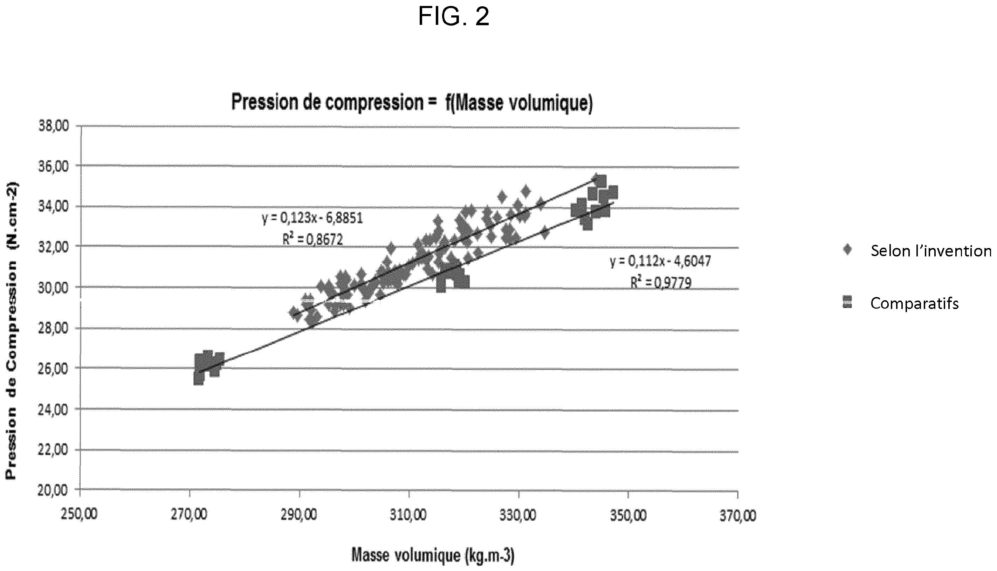

D'autres caractéristiques et avantages de l'invention apparaitront plus clairement à la lecture de la description, de l'exemple qui suit et des figures 1a à 1c et 2.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, l'expression « au moins un » utilisée dans la présente description est équivalente à l'expression « un ou plusieurs ».

Selon l'invention, la composition comprend des granulés de liège et une ou plusieurs substances hydrophobes en émulsion dans un solvant.

De préférence, la composition est exempte de microsphères.

Par « exempte de microsphères », on entend au sens de la présente invention une composition ne comprenant pas de microsphères, notamment en matière plastique.

Les granulés de liège pouvant être utilisés dans l'invention présentent de préférence une granulométrie de 0,01 mm jusqu'à 8 mm, de préférence de 0,25 mm à 3 mm.

La granulométrie peut être mesurée par exemple par la méthode des tamis, à température ambiante (18-25 °C).

La substance hydrophobe est de préférence une substance hydrophobe naturelle ou biosourcée.

Elle est choisie parmi les huiles, les cires, et leurs mélanges, mieux parmi les cires.

A titre d'exemples d'huile, on peut notamment citer l'huile de jojoba, l'huile de ricin, et leurs mélanges.

La ou les cires pouvant être utilisée(s) comme substance(s) hydrophobe(s) dans l'invention, sont notamment la cire de candelilla, la cire de carnauba, la cire d'Alfa, l'ozokérite, les cires végétales comme la cire d'olivier, la cire de riz, et la cire de jojoba hydrogénée, les cires animales comme les cires d'abeilles, ou les cires d'abeilles modifiées (cerabellina), la stéarine et leurs mélanges.

Plus particulièrement, la ou les cires est ou sont choisies parmi la cire de candelilla, la cire de carnauba, la cire d'abeille et leurs mélanges.

De préférence, la substance hydrophobe est choisie parmi l'huile de jojoba, l'huile de ricin, la cire de candelilla, la cire de carnauba, la cire d'abeille et leurs mélanges.

Dans un mode de réalisation, la substance hydrophobe est choisie parmi les substances hydrophobes naturelles ou biosourcées, comme les huiles et les cires biosourcées.

Plus particulièrement, la substance hydrophobe est choisie parmi les cires biosourcées, comme la cire de candelilla, la cire de carnauba, la cire d'abeille et leurs mélanges et encore mieux la cire est une cire d'abeille.

De préférence, la ou les substances hydrophobes sont contenues en une quantité allant de 1 à 20 g, plus préférentiellement de 5 à 12 g. de matière sèche pour 100 g. de granulés de liège.

Le solvant utilisé pour la mise en émulsion de la ou des substance(s) hydrophobe(s) est notamment choisi parmi l'eau, les alcools en C₁₋₄, tels que le méthanol ou l'éthanol, et leurs mélanges, et plus particulièrement parmi l'eau et l'éthanol, encore plus préférentiellement l'eau.

De préférence, le(s) solvant(s) est(sont) contenu(s) en une quantité allant de 40 à 90 % en poids, mieux de 60 à 80 % en poids par rapport au poids total de l'émulsion.

La composition telle que définie ci-dessus peut être utilisée notamment comme matière première de bouchon.

Un autre objet de l'invention est un matériau obtenu à partir de la composition selon l'invention. Il comprend notamment des granulés de liège enrobés par une ou plusieurs substances hydrophobes telles que citées ci-dessus.

Le procédé de fabrication d'un matériau à base de granulés de liège enrobés selon l'invention, à partir de la composition telle que définie ci-dessus, comprend :
(a) une étape de mélange des granulés de liège avec la ou les substances hydrophobes en émulsion dans un solvant, dans un malaxeur, à température ambiante (18-25 °C), sous pression atmosphérique (1,013 x 10⁵ Pa) ;
(b) une étape de séchage du mélange obtenu à l'étape (a) à une température inférieure à 160 °C, de préférence allant de la température ambiante (18-25 °C) à 100 °C, mieux de 50 à 80 °C, sous pression atmosphérique, pendant une durée allant de 5 minutes à 2 heures, de préférence de 10 minutes à 90 minutes, mieux encore de de 15 minutes à 60 minutes.

L'étape de séchage (b) peut être réalisée dans une étuve ou dans un séchoir à grain. L'objectif de cette étape est d'obtenir une humidité du granulé inférieure à 6% en poids par rapport au poids total de granulés de liège.

Un objet de l'invention est relatif à un matériau à base de granulés de liège enrobés susceptible(s) d'être obtenu(s) par le procédé ci-dessus.

L'invention concerne encore un bouchon comprenant un ou plusieurs matériaux selon l'invention. Ce bouchon est ainsi obtenu à partir d'une ou plusieurs compositions selon l'invention, et plus particulièrement à partir d'un ou de plusieurs matériaux à base de granulés de liège enrobés susceptible(s) d'être obtenu(s) par le procédé ci-dessus.

Le bouchon selon l'invention comprend notamment en outre au moins un liant qui peut être de type polyuréthane, polyépoxyde, ou polyhydroxyuréthane thermodurcissable.

Un liant particulièrement préféré est un liant biosourcé, tel qu'un polyuréthane biosourcé, un polyépoxyde biosourcé ou un polyhydroxyuréthane biosourcé, comme ceux décrits dans les demandes de brevet français Nos. 3 016 367 et 3 016 368.

Le(s) liant(s) est (sont) utilisé(s) en une quantité allant de 10 à 120 g de liant(s) pour 100 g de granulés de liège enrobés.

Le bouchon selon l'invention est ainsi de préférence fabriqué à partir de matières naturelles ou biosourcées. Il présente des propriétés physiques au moins équivalentes, à celles d'un bouchon en liège naturel et à celle des bouchons contenant au moins une partie de liège aggloméré à base de liant de l'art antérieur. Les propriétés d'un tel bouchon se caractérisent par l'absence d'infiltration ainsi que par de bonnes propriétés mécaniques.

Pour vérifier que les nouveaux bouchons sont bien étanches et ne peuvent pas avoir d'infiltrations, le test suivant peut être utilisé : on introduit des bouchons à tester dans des tubes à essais de diamètre 18,5 mm (correspondant au diamètre de la majorité des cols de bouteilles), puis on verse 3 ml d'une solution eau-éthanol à 12% en poids d'éthanol, colorée au bleu de méthylène, au-dessus des bouchons.

On soumet ensuite l'espace au-dessus de la solution hydro-alcoolique à une pression en l'augmentant progressivement jusqu'à 1,5 x 10⁵ Pa, pression qui est maintenue pendant 24 heures.

Au bout de ce temps, les bouchons sont sortis des tubes, coupés en deux dans le sens de la longueur, et examinés pour voir s'il y a des traces bleues synonymes d'infiltration.

Les propriétés mécaniques sont caractérisées par la force de compression pour le comprimer ou par la force que le bouchon renvoie sur le goulot de la bouteille communément appelé le retour élastique.

A titre indicatif, les bouchons de diamètre compris entre 26 et 31 mm sont caractérisés par la mesure de pression de compression. Cette mesure se fait en comprimant un bouchon à l'aide d'un piston qui se déplace à la vitesse de 10mm/min, à un diamètre compris entre 15 et 16 mm. La valeur de compression est ramenée à la surface cylindrique du bouchon. Celle-ci doit être comprise entre 15 et 60 N/cm² et préférentiellement entre 25 et 60 N/cm² selon les diamètres des bouchons.

A titre indicatif, les bouchons de diamètre compris entre 20 et 25 mm sont caractérisés par la mesure de la force de retour exercée par le bouchon après que le bouchon ait été comprimé à un diamètre de 15 à 16 mm, puis revenu à un diamètre de 18 à 21 mm et été maintenu pendant 3 minutes. La force obtenue est ramenée à la surface cylindrique du bouchon pour obtenir le retour élastique. Celle -ci doit être comprise pour les bouchons vin tranquille (diamètre de l'ordre de 24 mm) entre 0,8 et 5 N/cm², mieux allant de 1,5 à 4,5 N et préférentiellement 2 à 4 N.

Par exemple, la composition selon l'invention peut être utilisée dans la fabrication d'un bouchon technique tel que le « 1+1 », le « 2+2 », le « 0+2 » et le « 0+1 », ou de bouchons agglomérés ou microagglomérés.

Par« 1+1 », on entend un bouchon dont le corps est constitué de granulés de liège aggloméré avec un liant, tandis que les deux extrémités sont composées chacune d'une rondelle en liège naturel, lesdites rondelles étant obtenues par tubage d'un morceau de liège dont l'épaisseur correspond à celle des rondelles. Le tubage consiste à prélever un morceau de liège au moyen d'un emporte-pièce.

Le bouchon « 2+2 » est constitué d'une partie agglomérée et avec 2 rondelles aux extrémités, tandis que les bouchons « 0+2 » pour le champagne) ou les bouchons « 0+1 » pour les effervescents ne comprennent pas de rondelle à une extrémité et 2 ou 1 rondelle(s) à l'autre extrémité, respectivement.

L'invention a encore pour objet un procédé de fabrication de bouchons mettant en œuvre une composition selon l'invention. Ce procédé comprend les étapes (a) et (b) telles que définies ci-dessus, et les étapes suivantes :
(c) une étape de mélange du matériau obtenu à l'étape (b) avec un liant,
(d) une étape d'introduction du mélange dans des moules, et
(e) une étape de chauffage à une température allant de 60 à 150 °C préférentiellement de 110 à 140 °C sous pression atmosphérique pendant une durée allant de 10 à 90 minutes préférentiellement de 20 à 50 minutes.

Les bouchons ainsi obtenus sont bruts et on peut les soumettre à différentes étapes afin d'obtenir des bouchons prêts à la vente, telles qu'un usinage pour obtenir les dimensions recherchées, un marquage, et/ou une application d'un traitement de surface.

Un autre objet encore est un bouchon susceptible d'être obtenu par le procédé de fabrication.

L'exemple suivant est donné à titre purement illustratif de la présente invention.

### EXEMPLE

On a mélangé 100 kg de granulés de liège présentant une granulométrie comprise entre 0,48 et 1,5 mm, dans un malaxeur 10 mn avec 30 kg d'une émulsion de cire d'abeille dans l'eau à 30% en poids de matière sèche.

On a ensuite fait sécher le mélange obtenu à une température de 50 °C sous pression atmosphérique pendant 60 mn.

Les granulés de liège ainsi enrobés sont mélangés avec 50 kg de liant polyuréthane thermodurcissable.

On a ensuite introduit ce mélange dans les moules puis fait chauffer pendant 20 minutes à 130°C et 15 minutes à 70°C sous pression atmosphérique.

Des bouchons comparatifs ont été préparés selon le même mode opératoire. Mais en remplaçant l'émulsion de cire d'abeille par des microsphères expansibles.

Des bouchons témoins ont également été fabriqués selon le même mode opératoire mais sans microsphère ni cire.

L'infiltration de chaque série de bouchons a été évaluée selon le test décrit ci-dessus, et les bouchons ayant subi ce test d'infiltration ont été pris en photos.

La Figure 1a représente un bouchon selon l'invention, tandis que la Figure 1b représente un bouchon comparatif et la Figure 1c un bouchon témoin.

Aucun des bouchons moulés avec des granulés de liège enrobés de cire ne présente d'infiltration au cœur. Ils sont semblables aux bouchons comparatifs. Ceci peut être observé sur les Fig. 1a et 1b.

Par contre, les bouchons témoins de la Fig. 1c présentent des infiltrations.

En outre, les bouchons selon l'invention ont un comportement mécanique qui reste similaire à celui des bouchons comparatifs. En effet, des bouchons selon l'invention et comparatifs ainsi préparés ont été triés selon leur masse volumique, et leur pression de compression a été mesurée selon la technique indiquée plus haut.

Les résultats sont indiqués sur le graphique présenté en Fig. 2.

Ces résultats montrent que la pression nécessaire pour compresser le bouchon à 15 mm en fonction de la masse volumique évolue de manière très proche pour les bouchons selon l'invention par rapport aux bouchons comparatifs.

## Revendications

1. Composition comprenant des granulés de liège et une ou plusieurs substances hydrophobes choisies parmi les huiles, les cires, et leurs mélanges, en émulsion dans un solvant, **caractérisée en ce qu'**elle est exempte de microsphères.

2. Composition selon la revendication 1, **caractérisée en ce que** la substance hydrophobe est choisie parmi les cires telles que la cire de candelilla, la cire de carnauba, la cire d'Alfa, l'ozokérite, les cires végétales comme la cire d'olivier, la cire de riz et la cire de jojoba hydrogénée, les cires animales comme les cires d'abeilles, ou les cires d'abeilles modifiées (cerabellina), la stéarine et leurs mélanges, mieux parmi la cire de candelilla, la cire de carnauba, la cire d'abeille et leurs mélanges.

3. Composition selon la revendication 1 ou 2, **caractérisée en ce que** la ou les substances hydrophobes est ou sont naturelles ou biosourcées, notamment choisies parmi les huiles et les cires biosourcées.

4. Composition selon l'une quelconque des revendications précédentes, **caractérisée en ce que** la ou les substances hydrophobes sont contenues en une quantité allant de 1 à 20 g, de préférence de 5 à 12 g. de matière sèche pour 100 g. de liège.

5. Composition selon l'une quelconque des revendications précédentes, **caractérisée en ce que** le solvant est choisi parmi l'eau, les alcools en C₁₋₄ et leurs mélanges.

6. Composition selon l'une quelconque des revendications précédentes, **caractérisée en ce que** le(s) solvant(s) est (sont) contenu(s) en une quantité allant de 40 à 90 % en poids, de préférence de 60 à 80 % en poids par rapport au poids total de de l'émulsion.

7. Composition selon l'une quelconque des revendications précédentes, **caractérisée en ce que** les granulés de liège présentent une granulométrie allant de 0,01 à 8 mm, de préférence de 0,25 à 3 mm.

8. Utilisation de la composition selon l'une quelconque des revendications précédentes, comme matière première de bouchon.

9. Matériau obtenu à partir de la composition selon l'une quelconque des revendications 1 à 8, **caractérisé en ce que** les granulés de liège sont enrobés par la ou les substances hydrophobes.

10. Procédé de fabrication d'un matériau à base de granulés de liège enrobés, à partir de la composition selon l'une quelconque des revendications 1 à 7, comprenant :
(a) une étape de mélange des granulés de liège avec la ou les substances hydrophobes en émulsion dans un solvant, dans un malaxeur, à température ambiante, sous pression atmosphérique, et
(b) une étape de séchage du mélange obtenu à l'étape (a) à une température inférieure à 160 °C, de préférence allant de la température ambiante à 100 °C, sous pression atmosphérique, pendant une durée allant de 5 minutes à 2 heures.

11. Bouchon comprenant un ou plusieurs matériaux selon la revendication 9.

12. Bouchon selon la revendication 11, **caractérisé en ce qu'**il comprend au moins un liant.

13. Bouchon selon la revendication 12, **caractérisé en ce que** le liant est choisi parmi les polyuréthanes thermodurcissables, les époxydes thermodurcissables et les poly-hydroxyuréthanes thermodurcissables.

14. Procédé de fabrication d'un bouchon selon l'une quelconque des revendications 11 à 13, **caractérisé en ce qu'**il comprend le procédé selon la revendication 10, et les étapes suivantes :
(c) une étape de mélange du matériau obtenu à l'étape (b) avec un liant,
(d) une étape d'introduction du mélange dans des moules,
(e) une étape de chauffage à une température allant de 60 à 150 °C de préférence de 110 à 140°C sous pression atmosphérique pendant une durée allant de 10 à 90 minutes de préférence de 20 à 50 minutes.

## Patentansprüche

1. Zusammensetzung, die Korkgranulate und einen oder mehrere hydrophobe Stoffe umfasst, die aus Ölen, Wachsen und deren Mischungen ausgewählt sind, in Emulsion in einem Lösungsmittel, **dadurch gekennzeichnet, dass** sie frei von Mikrosphären ist.

2. Zusammensetzung nach Anspruch 1, **dadurch gekennzeichnet, dass** der hydrophobe Stoff unter Wachsen wie Candelillawachs, Carnaubawachs, Alphawachs, Ozokerit, pflanzlichen Wachsen wie Olivenwachs, Reiswachs und hydriertem Jojobawachs, tierischen Wachsen wie Bienenwachse, oder modifiziertem Bienenwachs (Cerabellina), Stearin und Mischungen davon, besser unter Candelillawachs, Carnaubawachs, Bienenwachs und deren Mischungen, ausgewählt ist.

3. Zusammensetzung nach Anspruch 1 oder 2, **dadurch gekennzeichnet, dass** der/die hydrophobe(n) Stoff(e) natürlich oder biobasiert sind und insbesondere aus biobasierenden Ölen und Wachsen ausgewählt sind.

4. Zusammensetzung nach einem der vorhergehenden Ansprüche, **dadurch gekennzeichnet, dass** der/die hydrophobe(n) Stoff(e) in einer Menge von 1 bis 20 g, vorzugsweise von 5 bis 12 g Trockensubstanz, pro 100 g Kork enthalten ist/sind.

5. Zusammensetzung nach einem der vorhergehenden Ansprüche, **dadurch gekennzeichnet, dass** das Lösungsmittel aus Wasser, C₁₋₄-Alkoholen und deren Mischungen ausgewählt ist.

6. Zusammensetzung nach einem der vorhergehenden Ansprüche, **dadurch gekennzeichnet, dass** das/die Lösungsmittel in einer Menge von 40 bis 90 Gew.-%, vorzugsweise von 60 bis 80 Gew.-% bezogen auf das Gesamtgewicht der Emulsion enthalten ist/sind.

7. Zusammensetzung nach einem der vorhergehenden Ansprüche, **dadurch gekennzeichnet, dass** die Korkgranulate eine Korngröße von 0,01 bis 8 mm, vorzugsweise von 0,25 bis 3 mm aufweisen.

8. Verwendung der Zusammensetzung nach einem der vorhergehenden Ansprüche als Stopfenrohstoff.

9. Material, das aus der Zusammensetzung nach einem der Ansprüche 1 bis 8 erhalten wird, **dadurch gekennzeichnet, dass** die Korkgranulate von dem/den hydrophoben Stoff(en) umhüllt ist.

10. Verfahren zur Herstellung eines Materials auf Basis von umhüllten Korkgranulaten aus der Zusammensetzung nach einem der Ansprüche 1 bis 7, umfassend:
(a) einen Schritt des Mischens der Korkgranulate mit dem/den hydrophoben Stoff(en) in Emulsion in einem Lösungsmittel, in einem Mischer, bei Raumtemperatur, unter Atmosphärendruck, und
(b) einen Schritt des Trocknens der in Schritt (a) erhaltenen Mischung bei einer Temperatur von weniger als 160 °C, vorzugsweise von Raumtemperatur bis 100 °C, unter Atmosphärendruck für eine Dauer von 5 Minuten bis 2 Stunden.

11. Stopfen, der ein oder mehrere Materialien nach Anspruch 9 umfasst.

12. Stopfen nach Anspruch 11, **dadurch gekennzeichnet, dass** er mindestens ein Bindemittel umfasst.

13. Stopfen nach Anspruch 12, **dadurch gekennzeichnet, dass** das Bindemittel aus duroplastischen Polyurethanen, duroplastischen Epoxiden und duroplastischen Polyhydroxyurethanen ausgewählt ist.

14. Verfahren zur Herstellung eines Stopfens nach einem der Ansprüche 11 bis 13, **dadurch gekennzeichnet, dass** es das Verfahren nach Anspruch 10 und die folgenden Schritte umfasst:
(c) einen Schritt des Mischens des in Schritt (b) erhaltenen Materials mit einem Bindemittel,
(d) einen Schritt des Einführens der Mischung in Formen,
(e) einen Schritt des Erhitzens bei einer Temperatur von 60 bis 150 °C vorzugsweise von 110 bis 140 °C unter Atmosphärendruck für eine Dauer von 10 bis 90 Minuten vorzugsweise von 20 bis 50 Minuten.

## Claims

1. Composition comprising cork granules and one or more hydrophobic substances selected from oils, waxes and mixtures thereof, emulsified in a solvent, **characterised in that** it is free of microspheres.

2. Composition according to Claim 1, **characterised in that** the hydrophobic substance is selected from waxes such as candelilla wax, carnauba wax, Alfa wax, ozokerite, vegetable waxes such as olive wax, rice wax and hydrogenated jojoba wax, animal waxes such as beeswax, or modified beeswax (cera bellina), stearin and mixtures thereof, preferably from candelilla wax, carnauba wax, beeswax and mixtures thereof.

3. Composition according to Claim 1 or 2, **characterised in that** the hydrophobic substance or substances is or are natural or bio-based, in particular selected from bio-based oils and waxes.

4. Composition according to any one of the preceding claims, **characterised in that** the hydrophobic substance or substances are contained in an amount ranging from 1 to 20 g, preferably from 5 to 12 g, of dry matter per 100 g of cork.

5. Composition according to any one of the preceding claims, **characterised in that** the solvent is selected from water, C₁₋₄ alcohols and mixtures thereof.

6. Composition according to any one of the preceding claims, **characterised in that** the solvent or solvents is or are contained in an amount ranging from 40 to 90 wt%, preferably from 60 to 80 wt%, expressed in terms of the total weight of the emulsion.

7. Composition according to any one of the preceding claims, **characterised in that** the cork granules have a particle size ranging from 0.01 to 8 mm, preferably from 0.25 to 3 mm.

8. Use of the composition according to any one of the preceding claims, as a raw material of a stopper.

9. Material obtained from the composition according to any one of Claims 1 to 8, **characterised in that** the cork granules are coated with the hydrophobic substance or substances.

10. Method for manufacturing a material based on coated cork granules from the composition according to any one of Claims 1 to 7, comprising:
(a) a step of mixing the cork granules with the hydrophobic substance or substances in emulsion in a solvent, in a mixer, at ambient temperature, under atmospheric pressure, and
(b) a step of drying the mixture obtained in step (a) at a temperature below 160°C, preferably ranging from room temperature to 100°C, under atmospheric pressure for a duration ranging from 5 minutes to 2 hours.

11. Stopper comprising one or more materials according to Claim 9.

12. Stopper according to Claim 11, **characterised in that** it comprises at least one binder.

13. Stopper according to Claim 12, **characterised in that** the binder is selected from thermosetting polyurethanes, thermosetting epoxides and thermosetting polyhydroxyurethanes.

14. Method for manufacturing a stopper according to any one of Claims 11 to 13, **characterised in that** it comprises the method according to Claim 10, and the following steps:
(c) a step of mixing the material obtained in step (b) with a binder,
(d) a step of introducing the mixture into moulds,
(e) a step of heating to a temperature ranging from 60 to 150°C, preferably from 110 to 140°C, under atmospheric pressure for a duration ranging from 10 to 90 minutes, preferably from 20 to 50 minutes.
